# EUROPEAN PATENT SPECIFICATION

(11) **EP 4 292 682 B1**
(45) Date of publication and mention of the grant of the patent: **22.10.2025**
(21) Application number: 23169966.1
(22) Date of filing: 26.04.2023
(51) Int. Cl.: A63F 13/215, A63F 13/54, A63F 13/87, A63F 13/98, H04R 3/00

(54) **MIXING DEVICE AND MIXING METHOD**
MISCHVORRICHTUNG UND MISCHVERFAHREN
DISPOSITIF DE MÉLANGE ET PROCÉDÉ DE MÉLANGE

(30) Priority: 10.06.2022 JP 2022094506
(43) Date of publication of application: 20.12.2023
(73) Proprietor: Roland Corporation, Hamamatsu, Shizuoka 431-1304 (JP)
(72) Inventor: WATANABE, Masakazu, Shizuoka, 431-1304 (JP)
(74) Representative: Becker, Eberhard

(56) References cited:
- US-A1- 2008 226 086
- US-A1- 2011 130 203
- US-A1- 2017 201 832
- VINCENT BUREL: "Voicemeeter information / quick start guide - VB-Audio's Forums", 13 October 2014 (2014-10-13), pages 1 - 6, XP093215220, Retrieved from the Internet <URL:https://forum.vb-audio.com/viewtopic.php?t=87> [retrieved on 20241015]

## Description

### BACKGROUND

### Technical Field

The invention relates to a mixing device and a mixing method.

### Description of Related Art

Non-patent Document 1 discloses an application software (briefly referred to as "application" in the following) in which multiple input sounds, such as sounds of a gaming machine or chat sounds, background music (BGM), etc., are mixed and output to multiple output destinations, such as a headphone and an Internet distribution destination of game play motion pictures. On the screen of the application, a volume operation part which changes the volume of each input sound and an output destination operation part which specifies the output destination to change the volume by using the volume operation part are displayed, and, with the user operating the volume operation part or the output destination operation part via a mouse, etc., the volume can be changed, or the output destination to change the volume can be specified.

### [Prior Art Documents]

### [Non-patent Document]

[Non-patent Document 1] [Searched on June 8, 2022] Internet

US 2017/201832 A1 relates to a headset audio system having a headset, a control unit, and a control assignment selector, wherein the headset provides output audio to a user from first and second audio signals and the control unit allows a user adjustment of audio parameters and includes first and second assignable audio controls. Non-patent document Vincent Burel: "Voicemeeter information/quick start guide - VB-Audio's Forums", 13 October 2014, pages 1-6, relates to techniques of audio controls.

### SUMMARY

### [Issues to be solved by the invention]

However, in the application of Non-patent Document 1, in the case of changing the volume, etc., during game play, the game play operation needs to pause, the screen needs to be switched to the application, and the operation part needs to be operated by using a mouse, etc. Since such troublesome operation for changing the volume, etc., may causes interference with game play, there is a concern that an adverse effect may be exerted on play results, and the viewer of the game pictures that are distributed may feel uncomfortable.

The invention is made to solve the above issue, and an objective of the invention is provide a mixing device and a mixing method capable of intuitively selecting an output unit as the target for setting a sound setting value and setting the sound setting value. The invention is defined by the appended claims.

### BRIEF DESCRIPTION OF THE DRAWINGS

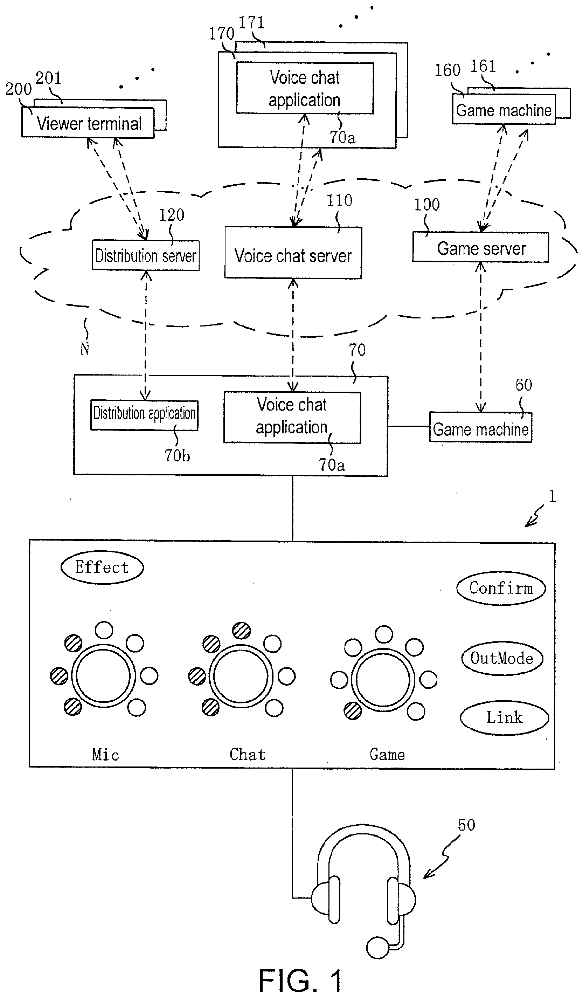

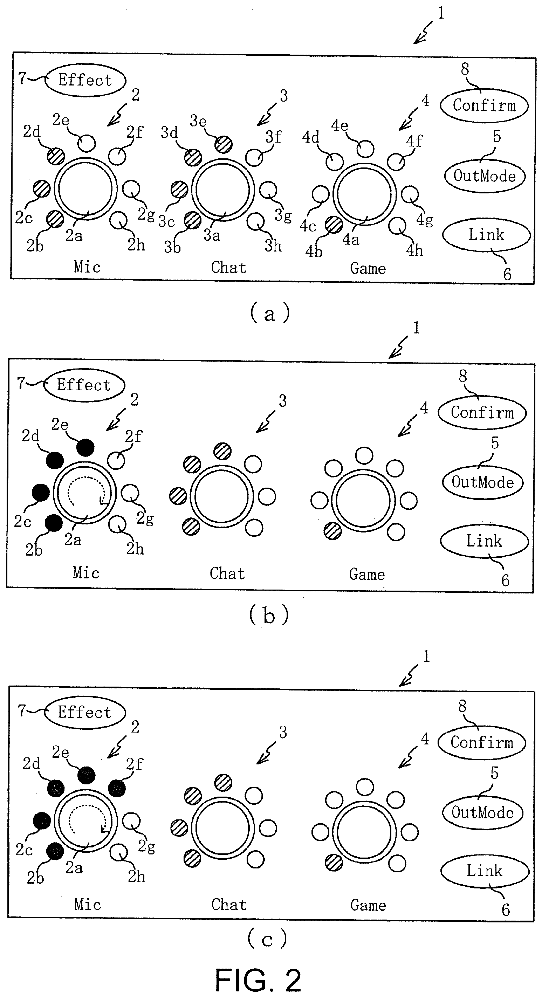

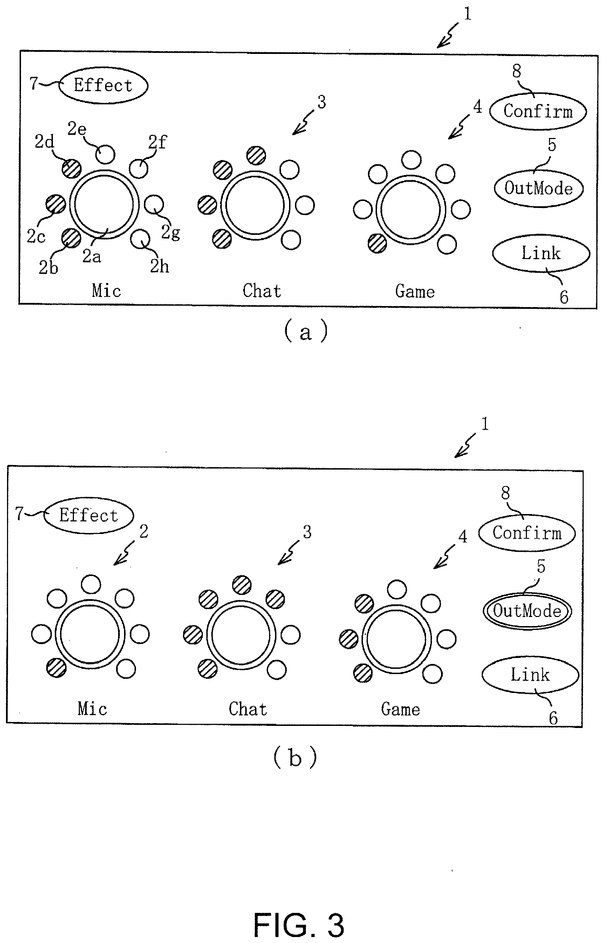

FIG. 1 is a schematic view illustrating a mixing device according to an embodiment.
(a) of FIG. 2 is a top view of the mixing device, (b) of FIG. 2 is a top view of the mixing device immediately after a knob operation is started, and (c) of FIG. 2 is a top view of the mixing device in the middle of the knob operation.
(a) of FIG. 3 is a top view of the mixing device in a case where a target output destination button is OFF, and (b) of FIG. 3 is a top view of the mixing device in a case where the target output destination button is ON.
FIG. 4 is a functional block diagram of the mixing device.
FIG. 5 is a block diagram illustrating an electrical configuration of the mixing device.
FIG. 6 is a diagram schematically illustrating a setting value table.
FIG. 7 is a flowchart of a main process.
(a) of FIG. 8 is a flowchart of a level display process, and (b) of FIG. 8 is a flowchart of a sound output process.
FIG. 9 is a flowchart of an operation process.
(a) of FIG. 10 is a top view of a mixing device in a modified example, (b) of FIG. 10 is a top view of a mixing device in another modified example, and (c) of FIG. 10 is a top view of a mixing device in yet another modified example.

### DESCRIPTION OF THE EMBODIMENTS

In the following, the exemplary embodiments are described with reference to the accompanying drawings. A mixing device 1 according to an embodiment is schematically described with reference to FIG. 1. FIG. 1 is a view illustrating an appearance of the mixing device 1. The mixing device 1 is a device that mixes (synthesizes) multiple sounds that are input and outputs mixed sounds to multiple output destinations. A headset 50 and a PC70 are connected to the mixing device 1.

The headset 50 is an input/output device having a microphone which inputs sounds and a headphone which outputs sounds. The headset 50 is worn by the user H. A sound generated by the user H is input from the microphone to the mixing device 1, and the sound is further input to the PC 70 from the mixing device 1. In addition, a sound from the mixing device 1 is input to the headphone.

The PC 70 is an information processing device (computer) outputting, to a distribution server 120, motion pictures and sounds from a game machine 60 that is connected and sound exchanges through a voice chat application 70a to be described afterwards. The game machine 60 of the embodiment is configured to be connected to other game machines 160, 161, etc., via a game server 100 and capable of player-versus-player (PvP) game play through a game among the game machine 60 and the game machines 160, 161, etc. The game play motion pictures and sounds from the PvP game play with the other game machines 160, 161, etc., are output from the game machine 60 to the PC 70, and the sounds among the game play motion pictures and sounds are output from the PC 70 to the mixing device 1.

The PC 70 is mainly installed with the voice chat application 70a and a distribution application 70b. The voice chat application 70a is an application software for exchanges through voice (i.e., voice chat) with other PCs 170, 171, etc., connected to a voice chat server 110 connected on the Internet N.

The sounds of the user H playing the game machine 60 input from the headset 50 via the mixing device 1 are transmitted to the voice chat server 110, and the sounds are transmitted from the voice chat server 110 to the voice chat applications 70a of the other PCs 170, 171, etc.

Meanwhile, in the embodiment, the users H of the other game machines 160, 161, etc., and the users H of the PCs 170, 171, etc., are the same, and the sounds of the users H playing the game by using the game machines 160, 161, etc., are transmitted to the voice chat server 110 via the voice chat applications 70a of the PCs 170, 171, etc., and transmitted from the voice chat server 110 to the voice chat application 70a of the PC 70.

Then, the sounds received by the voice chat application 70a of the PC 70 are output to the mixing device 1, and output from the mixing device 1 to the headset 50. In this way, the voice chat among the user H of the PC 70 and the users H of the other PCs 170, 171, etc., are realized.

The distribution application 70b is an application software that generates distribution contents and transmits the distribution contents to the distribution server 120. The distribution contents are contents formed by game play motion pictures from the game machine 60, sounds of the voice chat (simply referred to as "voice chat sounds" in the following) received from the other PCs 170, 171, etc., by using the voice chat application 70a and sounds input from the microphone of the headset 50 (simply referred to as "microphone sounds" in the following). While details will be described in the following, the sounds mixed by the mixing device 1 are used for the sounds among the distribution contents, i.e., the sounds of the game machine 60, the voice chat sounds, and the microphone sounds.

The generated distribution contents are transmitted from the distribution application 70b to the transmission server 120, and the distribution contents transmitted to the distribution server 120 are distributed to viewer terminals 200, 201, etc. By playing the distribution contents distributed to the viewer terminals 200, 201, etc., the play motion pictures and the sounds thereof from the game machine 60, and the voice chat among the users H at such time can be viewed by the users H of the viewer terminals 200, 201, etc. Although a PC, a mobile terminal, and a table terminal are shown, as examples, as the viewer terminals 200, 201, etc., in the embodiment, the viewer terminals may also be information processing devices other than the above.

According to the above, the sounds output from the mixing device 1 in the embodiment are mainly of two types, i.e., the sounds output from the headphone of the headset 50 and the sounds included in the distribution contents. The sounds output from the headphone of the headset 50 and the sounds included in the distribution contents are both sounds in which the sounds from the game machine 60, the voice chat sounds and the microphone sounds are mixed.

However, in the sounds output from the headset 50 and the sounds included in the distribution contents, there are cases where it is intended to vary the respective volume setting values (volumes) or degrees of acoustic effects (e.g., reverb, delay, etc.) for the sounds from the game machine 60, etc.

Therefore, the mixing device 1 of the embodiment is configured to be able to easily and intuitively change the respective volumes and sound effect degrees of the sounds output from the headset 50 and the sounds included in the distribution contents. The setting of the volume setting values or the degrees of the acoustic effects of the sounds in the mixing device 1 is described with reference to FIGs. 2 and 3.

(a) of FIG. 2 is a top view of the mixing device 1, (b) of FIG. 2 is a top view of the mixing device 1 immediately after an operation on a knob 2a is started, and (c) of FIG. 2 is a top view of the mixing device in the middle of the operation on the knob 2a. As shown in (a) of FIG. 2, the mixing device 1 is provided with a first operator 2, a second operator 3, a third operator 4, a target output destination button 5, a link button 6, an effect setting button 7, and a confirmation button 8.

The first operator 2 is a member for setting the volume setting value or the acoustic effect degree of the sounds input from the microphone. In the following, a sound-related parameter such as sounds or acoustic effects, is referred to as "sound setting", and a setting value of sound setting, such as the volume setting value or the acoustic effect degree of the sounds are referred to as a "sound setting value".

The first operator 2 is provided with the knob 2a and light emitting diodes (LEDs) 2b to 2h. The knob 2a is a rotation-type operator formed in a circular shape when viewed in a top view, and is a component that changes (sets) the sound setting value corresponding to the microphone sounds. Specifically, by rotating the knob 2a rightward (clockwise direction), the sound setting value is increased, and by rotating the knob 2b leftward (counterclockwise direction), the sound setting value is decreased.

In addition, the knob 2a is configured to be able to limitlessly rotate in the operation direction (rightward or leftward). Accordingly, even if the knob 2a keeps rotating rightward, the rotation thereof does not stop halfway, and even if the knob 2a keeps rotating leftward, the rotation thereof does not stop halfway.

The LEDs 2b to 2h are a display device provided along the outer circumference of the knob 2a. The LEDs 2b to 2h display one of the sound setting value applied to the microphone sounds and a real-time output level (level meter) of the sounds as a result of applying the sound setting value to the microphone sounds. LED 2b → LED 2c → LED 2d → LED 2e → LED 2f → LED 2g → LED 2h are lit up in an order in which the sound setting value or the output level increases.

In the embodiment, the sound setting value or the output level is provided for each output destination of the mixed sounds, that is, for each of the headset 50 and the distribution contents. Among the output destinations, an output destination of a target (referred to as "target output destination") whose the sound setting value (i.e., the volume setting value or the degree of the acoustic effect of the sounds) is displayed by the LEDs 2b to 2h and changed by the knob 2a is configured to be switchable by the target output destination button 5 to be described afterwards. Accordingly, the LEDs 2b to 2h display the sound setting value or the output level corresponding to the output destination in accordance with the setting state of the target output destination button 5.

In addition, the switching between the display of the sound setting value and the display of the output level by using the LEDs 2b to 2h is carried out in accordance with the rightward or leftward operation of the knob 2a. (a) of FIG. 2 illustrates a state in which the user H is not operating the knob 2a. In such case, the LEDs 2b to 2h display the output level. In (a) to (c) of FIG. 2 and the subsequent drawings, the display of the LEDs 2b to 2h in the case of the output level is indicated by hatching of the LEDs 2b to 2h.

When intending to increase the sound setting value in such state, the user H rotates the knob 2a rightward. By doing so, as shown in (b) of FIG. 2, the display of the LEDs 2b to 2h is switched to the sound setting value. At this time, the display mode (e.g., the lighting color) of the LEDs 2b to 2h may be changed to a mode different from that of the output level. In (a) to (c) of FIG. 2, the display of the LEDs 2b to 2h is shown in black in the case of the sound setting value. Here, the knob 2a is operated and there is a time lag until the display of the LEDs 2b to 2h is changed from the output level to the sound setting value. Therefore, there are also cases where the output level is displayed on the LEDs 2b to 2h even though the knob 2a is operated. In such case, if the sound setting value is changed in accordance with the operation of the knob 2a, there is a concern that a sound setting value unexpected by the user H is set.

Therefore, in the period between the time when the knob 2a is operated and the display of the LEDs 2b to 2h is changed from the output level to the sound setting value, a change of the sound setting value through the operation of the knob 2a is not accepted, and a change of the sound setting value through the operation of the knob 2a is received after the display of the LEDs 2b to 2h is changed to the sound setting value (see (c) of FIG. 2). Accordingly, since it is possible to change the sound setting value by operating the knob 2a only in the state in which the user H can visually recognize the sound setting value, a situation in which a sound setting value unexpected by the user H is set can be suppressed.

In addition, in the case where the sound setting value is increased by rotating the knob 2a rightward, the LEDs are lid up accordingly in the order of LED 2b → LED 2c → LED 2d → LED 2e → LED 2f → LED 2g → LED 2h. On the contrary, in the case where the sound setting value is decreased by rotating the knob 2a leftward, the LEDs are turned off accordingly in the order of LED 2h → LED 2g → LED 2f → LED 2e → LED 2d → LED 2c → LED 2b.

That is, the operation direction of the knob 2a for increasing/decreasing the sound setting value conforms to the direction of lighting up/turning off the LEDs 2b to 2h. Accordingly, since a sense of conformity is provided between the increase/decrease in the sound setting value by operating the knob 2a and the ON/OFF of the LEDs 2b to 2h, the user H can set the sound setting value intuitively by using the knob 2a.

In addition, by switching the display of the LEDs 2b to 2h between the output level and the sound setting value in accordance with the operation of the knob 2a, the output level of the sounds actually output when setting the sound setting value can be confirmed or compared. With this as well, the user H can set the sound setting value intuitively. Moreover, by displaying both the output level and the sound setting value on the LEDs 2b to 2h, it is not required to provide a display device for each of the output level and the sound setting value. Accordingly, the mixing device 1 can be configured in a compact manner, and the manufacturing cost of the mixing device can be reduced.

The second operator 3 is a member for setting the volume setting value or the degree of the acoustic effect of the voice chat sounds, and is provided with a knob 3a and LEDs 3b to 3h. The knob 3a is a rotation-type operator formed in a circular shape when viewed in a top view, and is a component that changes the volume setting value of the voice chat sounds. The LEDs 3b to 3h are a display device provided along the periphery of the knob 3a, and are members displaying the sound setting value or the output level corresponding to the voice chat sounds. The knob 3a has the same configuration as the knob 2a, and the LEDs 3b to 3h have the same configuration as the LEDs 2b to 2h. Therefore, detailed descriptions thereof will be omitted.

In addition, the third operator 4 is a member for setting the volume setting value or the degree of the acoustic effect of the sounds from the game machine 60, and is provided with a knob 4a and LEDs 4b to 4h. The knob 4a is a rotation-type operator formed in a circular shape when viewed in a top view, and is a component that changes the volume setting value of the sounds from the game machine 60. The LEDs 4b to 4h are a display device provided along the periphery of the knob 4a, and are members displaying the sound setting value or the output level corresponding to the sounds from the game machine 60. The knob 4a has the same configuration as the knob 2a, and the LEDs 4b to 4h have the same configuration as the LEDs 2b to 2h. Therefore, detailed descriptions thereof will be omitted.

The target output destination button 5 is an operator for selecting the target output destination (i.e., the headset 50 or the distribution contents) for changing the sound setting values through the knobs 2a to 4a or displaying the sound setting values or the output levels through the LEDs 2b to 4h in the first to third operator 2 to 4. The operation of the target output destination button 5 is described with reference to (a) and (b) of FIG. 3.

(a) of FIG. 3 is a top view of the mixing device 1 in a case where the target output destination button 5 is OFF, and (b) of FIG. 3 is a top view of the mixing device 1 in a case where the target output destination button 5 is ON. In the embodiment, in the case where the target output destination button 5 is OFF, the headset 50 is set as the target output destination, and in the case where the target output destination button 5 is ON, the distribution contents are set as the target output destination.

Accordingly, in the case where the target output destination button 5 is OFF as shown in (a) of FIG. 3, by displaying the output levels, etc., corresponding to the headset 50 on the LEDs 2b to 4h and operating the knobs 2a to 4a in the state in which the target output button 5 is OFF, the respective sound setting values of the microphone sounds, the voice chat sounds, and the sounds from the game machine 60 corresponding to the headset 50 are changed.

Similarly, in the case where the target output destination button 5 is ON as shown in (b) of FIG. 3, by displaying the output levels, etc., corresponding to the distribution contents on the LEDs 2b to 4h and operating the knobs 2a to 4a in the state in which the target output button 5 is ON, the respective sound setting values of the microphone sounds, the voice chat sounds, and the sounds from the game machine 60 corresponding to the distribution contents are changed.

By selecting the target output destination by using the target output destination button 5 and operating the knobs 2a to 4a, the sound setting values of the selected target output destination corresponding to the knobs 2a to 4a, respectively, are set. In addition, the sound setting values set by the knobs 2a to 4a for each target output destination are applied to the microphone sounds, the voice chat sounds, and the sounds from the game machine 60, respectively, and the sounds to which the sound setting values are applied are mixed. The mixed sounds for each target output destination are output to each output destination.

According to the above, the change of the sound setting values and the selection of the target output destination for changing the sound setting values can be performed by the physical knobs 2a to 4a and target output destination button 5. Accordingly, compared with the case where the user H changes the target output destination and sets the sound setting values to the target output destination by using a display device and an input device, such as a mouse, (neither of which are shown herein) connected to the PC 70, the change and the setting can be carried out more intuitively.

In addition, the knobs 2a to 4a are configured to be rotatable limitlessly in the operation direction. Accordingly, for example, after the target output destination button 5 is set to OFF and the sound setting value of the headset 50 is increased by rotating the knob 2a rightward, even if the target output destination button 5 is set to ON and the knob 2a is rotated rightward to increase the sound setting value of the distribution contents, the rotation of the knob 2a is not stopped halfway. Accordingly, in the case where the setting of the sound setting values of the headset 50 and the setting of the sound setting values of the distribution contents are carried out continuously by using the same knobs 2a to 4a, the operability for the user H can be facilitated.

The link button 6 is an operator of switching between whether to set the sound setting values through operation of the knobs 2a to 4a at both target output destinations (i.e., the headset 50 and the distribution contents). In the case where the link button 6 is OFF, only the sound setting values of the target output destination selected by the target output destination button 5 are set in accordance with the operation of the knobs 2a to 4a.

Meanwhile, in the case where the link button 6 is ON, the respective sound setting values of the headset 50 and the distribution contents are set in accordance with the operation of the knobs 2a to 4a. Specifically, the variation amounts of the sound setting values in accordance with the operation of the knobs 2a to 4a are added to the respective sound setting values of the headset 50 and the distribution contents. In the case where the knobs 2a to 4a are rotated leftward, since the variation amounts of the sound setting values are negative, the sound setting values of each of the headset 50 and the distribution contents are reduced by the amounts of the absolute values of the variation amounts.

Accordingly, by setting the link button 6 to ON, the sound setting values of both of the headset 50 and the distribution contents are added by the same variation amount by operating the knobs 2a to 4a once. Accordingly, compared with the case where the sound setting values are changed while switching the output destination between the headset 50 and the distribution contents by using the target output destination button 5, the time and effort of the user H for changing the sound setting values can be omitted.

Meanwhile, even in the case where the link button 6 is set to ON, the sound setting value displayed by the LEDs 4b to 4h is only the sound setting value of the target output destination selected by the target output destination button 5. Accordingly, since the sound setting value of the one not selected by the target output destination button 5 is not displayed on the LEDs 4b to 4h, by setting the link button 6 to ON and operating the knobs 2a to 4a, the sound setting value not selected by the target output destination button 5 may exceed the upper limit or the lower limit.

Therefore, in the embodiment, when the link button 6 is set to ON and the knobs 2a to 4a are operated, in the case where any of the sound setting values of the headset 50 and the distribution contents exceeds the upper limit or the lower limit, it is configured to set none of the voice setting values (i.e., that is, the setting is performed until any of the sound setting values reaches the upper limit or the lower limit). Accordingly, the situation in which the sound setting value of the one not selected by the target output destination button 5 and not displayed by the LEDs 4b to 4h is set to exceed the upper limit or the lower limit can be suppressed, and the setting of the sound setting values of the headset 50 and the distribution contents can be performed within a suitable range.

In addition, by configuring to set none of the sound setting values in the case where any of the sound setting values of the headset 50 and the distribution contents exceeds the upper limit or the lower limit, in the case where any of the sound setting values exceeds the upper limit or the lower limit, the display of the LEDs 2b to 4h does not change even if the knobs 2a to 4a are operated. Accordingly, the user H can recognize that one of the sound setting values is set to reach the upper limit or lower limit through the display of the LEDs 2b to 4h.

The effect setting button 7 is an operator for switching a sound setting target (referred to as "target setting" in the following) displayed by the LEDs 4b to 4h to the volume setting value or the degree of the acoustic effect. In the case where the effect setting button 7 is ON, "acoustic effect degree" is set in the target setting, and in the case where the effect setting button is OFF, "volume setting value" is set in the target setting.

In particular, by setting the effect setting button 7 to ON to set the target setting set by the knobs 2a to 4a to "acoustic effect degree", and setting the degree of the acoustic effect to the lowest values (e.g., 0) by using the knobs 2a to 4a, the acoustic effect can be set to OFF. In addition, by setting the degrees of the acoustic effect by using the knobs 2a to 4a to a value greater than the lowest value, the acoustic effect can be set to ON, and the degree of such acoustic effect can be further adjusted by the knobs 2a to 4a.

The confirmation button 8 is an operator for switching whether to also output the sounds mixed for the distribution contents to the headset 50. In the case where the confirmation button 8 is ON, the sounds mixed for the distribution contents are also output to the headset 50. Meanwhile, in the case where the confirmation button 8 is OFF, the sounds originally mixed for the headset 50 are output to the headset 50. By setting the confirmation button 8 to ON, in place of the sounds originally mixed for the headset 50, the sounds mixed for the distribution contents can be confirmed by using the headset 50. Therefore, the user H can listen to such sounds while changing/adjusting the sound setting values of the distribution contents by using the knobs 2a to 4a.

It may also be that the target output destination button 5 is provided with a function same as the confirmation button 8 and the confirmation button 8 is omitted from the mixing device 1. Specifically, it may also be that, in the case where the target output destination button 5 is OFF, the sounds mixed for the headset 50 are output from the headset 50, and in the case where the target output destination button 5 is ON, the sounds mixed for the distribution contents are output from the headset 50.

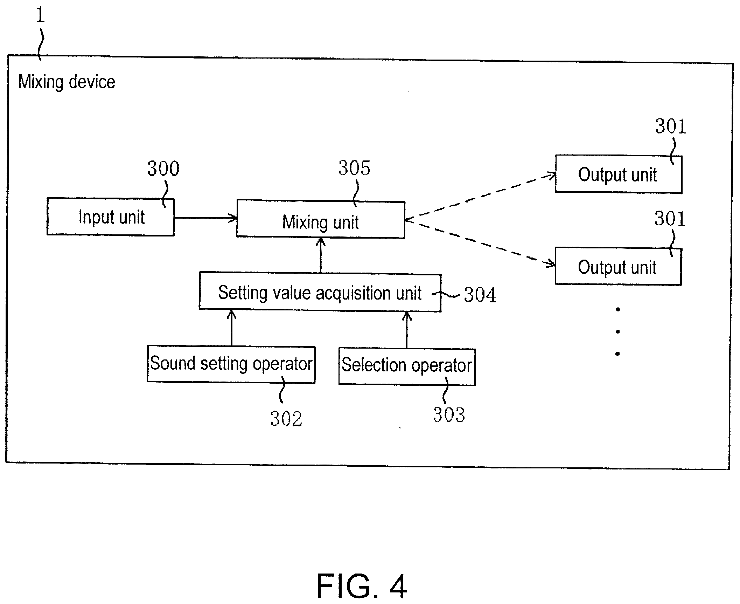

In the following, functions of the mixing device 1 are described with reference to FIG. 4. FIG. 4 is a functional block diagram of the mixing device 1. As shown in FIG. 4, the mixing device 1 has an input unit 300, multiple output units 301, a sound setting operator 302, a selection operator 303, a setting value acquisition unit 304, and a mixing unit 305.

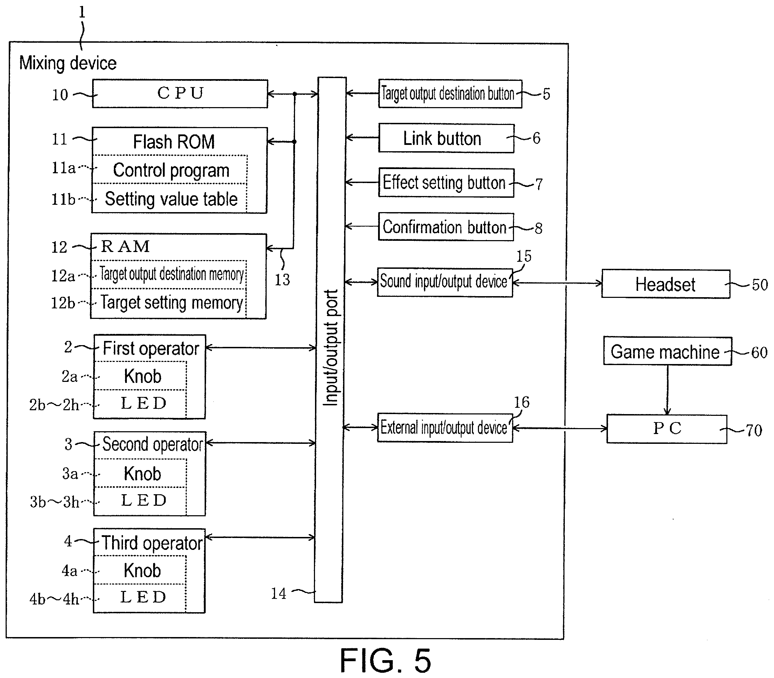

The input unit 300 inputs sounds, and is realized by a CPU 10, a sound input/output device 15, and an external input/output device 16 to be described afterwards in FIG. 5. The output unit 301 outputs sounds, and is realized by the sound input/output device 15 and the external input/output device 16. The sound setting operator 302 is an operator for setting the sound setting values and realized by the knobs 2a to 4a. The selection operator 303 is an operator for selecting the output unit 301a of the target for setting the sound setting value and realized by the target output destination setting button 5.

The setting value acquisition unit 304 acquires the sound setting values set by the sound setting operator 302 with respect to the output unit 301 selected by the selection operator 303 and realized by the CPU 10. The mixing unit 305, for each output unit 301, mixes the sounds input at the input unit 300 based on the sound setting values corresponding to the output unit 301 and being sound setting values acquired by the setting value acquisition unit 304, and is realized by the CPU 10.

That is, the selection of the output unit 301 as the target of setting the sound setting values and the setting of the sound setting values with respect to the output unit 301 are performed by the selection operator 303 and the sound setting operator 302 that are physical operators. Accordingly, the user H can intuitively select the output unit 301 of the target of setting these sound setting values and set the sound setting values.

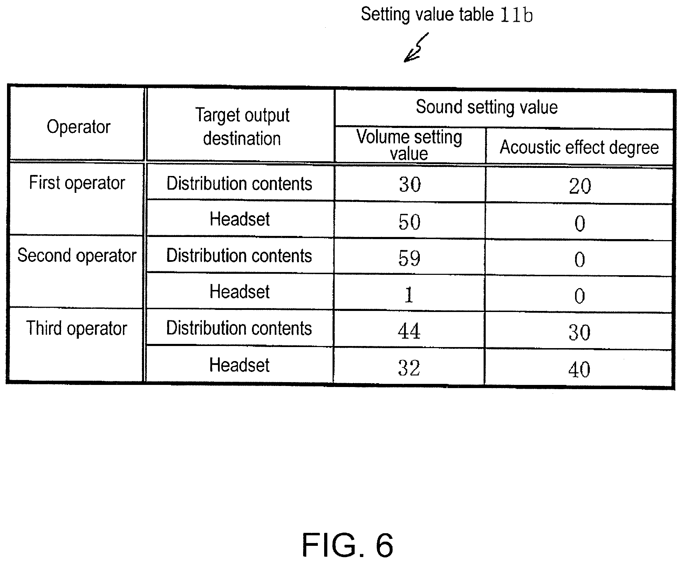

In the following, the electrical configuration of the mixing device 1 is described with reference to FIGs. 5 and 6. FIG. 5 is a block diagram illustrating an electrical configuration of the mixing device 1. The mixing device 1 is provided with the CPU 10, a flash ROM 11, and a RAM 12. The CPU 10, the flash ROM 11, and the RAM 12 are respectively connected to an input/output port 14 via bus lines 13. The input/output port 14 is further connected to the first operator 2, the second operator 3, the third operator 4, the target output destination button 5, the link button 6, the effect setting button 7 and the confirmation button 8, the sound input/output device 15, and the external input/output device 16.

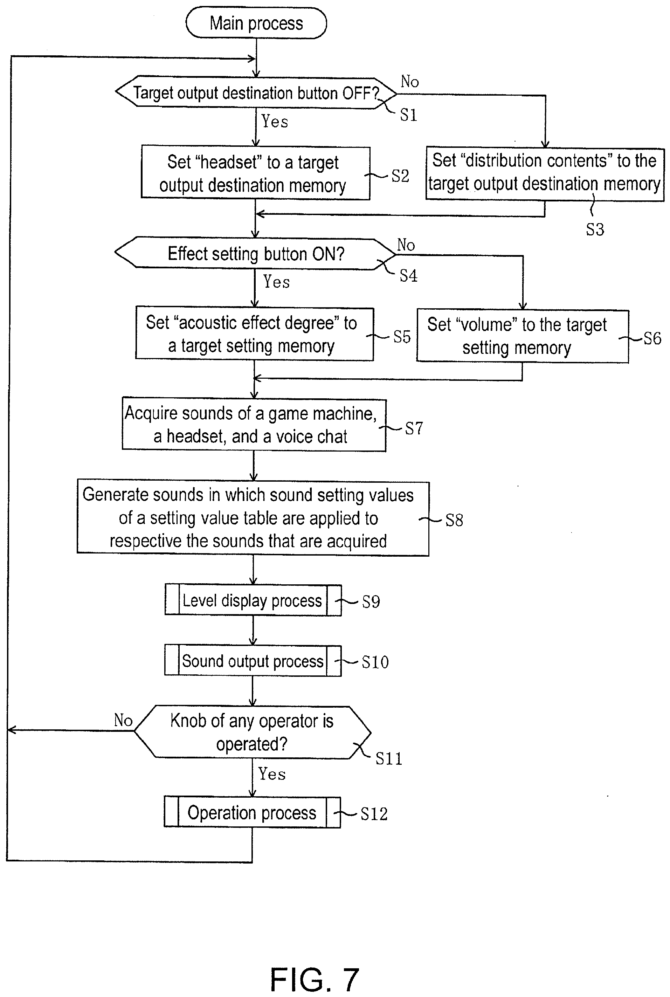

The CPU 10 is an arithmetic device controlling each unit connected by the bus line 13. The flash ROM 11 is a rewritable non-volatile storage device storing a program executed by the CPU 10 and fixed value data, etc., and includes a control program 11a and a setting value table 11b. When the control program 11a is executed in the CPU 10, a main process of FIG. 7 is executed. The setting value table 11b is described with reference to FIG. 6.

FIG. 6 is a diagram schematically illustrating the setting value table 11b. As shown in FIG. 6, in the setting value table 11b, the sound setting values (i.e., the volume setting value and the degree of the acoustic effect) are stored for each combination of the first to third operators 2 to 4 and the target output destinations (i.e., the distribution contents or the headset 50).

Referring to FIG. 5 again, the RAM 12 includes a memory rewritably storing various work data or flags when the CPU 10 executes the control program 11a, a target output destination memory 12a storing the target output destinations, and a target setting memory 12b storing the target settings of the sound settings.

The sound input/output device 15 is a device that inputs sounds from the microphone of the headset 50 and outputs sounds to the headphone of the headset 50. The external input/output device 16 is a device for communication with an external machine, and is connected with the PC 70. The voice chat sounds or the sounds from the game machine 60 connected to the PC 70 are input to the mixing device 1 from the PC 70 via the external input/output device 16. At this time, the sounds from the game machine 60 and the voice chat sounds are input separately from the external input/output device 16. In addition, the mixed sounds for the distribution contents from the mixing device 1 are output to the PC 70 via the external input/output device 16.

In the following, the processes executed by the CPU 10 are described with reference to FIGs. 7 to 9. FIG. 7 is a flowchart of a main process. The main process is a process executed by the CPU 10 after the power of the mixing device 1 is turned on.

In the main process, firstly, whether the target output destination button 5 is OFF is confirmed (S1). In the case where the target output destination button 5 is OFF (S1: YES) in the process of S1, the target output destination memory 12a is set to "headset 50" (S2). Meanwhile, in the case where the target output destination button 5 is OFF (S1: NO) in the process of S1, the target output destination memory 12a is set to "distribution contents" (S3).

After the processes of S2, S3, whether the effect setting button 7 is ON is confirmed (S4). In the case where the effect setting button 7 is ON (S4: YES) in the process of S4, the target setting memory 12b is set to "acoustic effect degree" (S5). Meanwhile, in the process of S4, in the case where the effect setting button 7 is OFF (S4: NO), the target setting memory 12b is set to "volume" (S6).

After the processes of S5, S6, the sounds from the game machine 60 and the voice chat sounds are acquired from the PC 70, and the microphone sounds are acquired from the headset 50 (S7). After the process of S7, the sounds in which the sound setting values of the setting value table 11b are applied to the sounds from the game machine 60, the voice chat sounds, and the microphone sounds are generated (S8).

Specifically, the sounds in which the sound setting values of the first operator 2 corresponding to the distribution contents are obtained from the setting value table 11 and the acquired sound setting values are applied to the microphone sounds, that is, the sounds in which the sound setting value ("30" in FIG. 6) of the first operator 2 corresponding to the distribution contents is applied to the microphone sounds and the acoustic effect based on the degree of the acoustic effect ("20" in FIG. 6) of the first operator 2 corresponding to the distribution contents is further applied to such sounds, are generated. In addition, the sound setting values of the first operator 2 corresponding to the headset 50 are acquired from the setting value table 11b, and the sounds in which the sound setting values that are acquired are applied to the microphone sounds are generated.

Similarly, the sound setting values of the second operator 3 corresponding to the distribution contents and the sound setting values of the second operator 3 corresponding to the headset 50 are acquired from the setting value table 11b, and the sounds in which the sound setting values that are respectively acquired are applied to the voice chat sounds are generated respectively. In addition, the sound setting values of the third operator 4 corresponding to the distribution contents and the sound setting values of the third operator 4 corresponding to the headset 50 are acquired from the setting value table 11b, and the sounds in which the sound setting values that are respectively required are applied to the sounds of the game machine 60 are generated respectively.

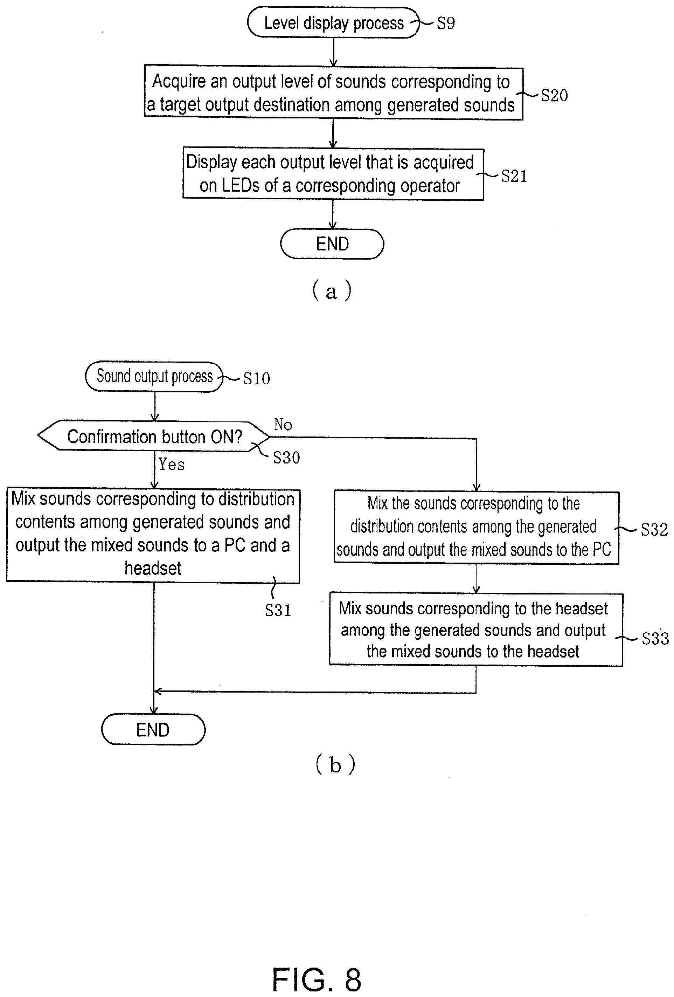

After the process of S8, a level display process (S9) is executed, and then a sound output process (S10) is executed. The level display process and the sound output process are described with reference to FIG. 8.

(a) of FIG. 8 is a flowchart of the level display process. In the level display process, firstly, among the sounds generated in the process of S8 of FIG. 7, the output levels of the sounds corresponding to the target output destination of the target output destination memory 12a are respectively acquired (S20). After the process of S20, the output levels of the sounds that are acquired are respectively displayed on the LEDs 2b to 4h of the first to third operators 2 to 4 (S21), and the level display process ends.

(b) of FIG. 8 is a flowchart of the sound output process. In the sound output process, firstly, whether the confirmation button 8 is ON is confirmed (S30). In the case where the confirmation button 8 is ON (S30: YES) in the process of S30, among the sounds generated in the process of S8 of FIG. 7, the sounds corresponding to the distribution contents are acquired, mixed, and respectively output to the PC 70 and the headset 50 (S31). Accordingly, in the headset 50 as well, the sounds output in the distribution contents are also output.

Meanwhile, in the case where the confirmation button 8 is OFF (S30: NO) in the process of S30, among the sounds generated in the process of S8, the sounds corresponding to the distribution contents are acquired, mixed, and output to the PC 70 (S32). After the process of S32, among the sounds generated in the process of S8, the sounds corresponding to the headset 50 are acquired, mixed, and output to the headset 50 (S33). After the processes of S31 and S33, the sound output process ends.

Here, as noted above, it may also be that the confirmation button 8 is omitted from the mixing device 1, and the sounds output to the headset 50 are switched in accordance with the setting state of the target output button 5. Specifically, in the case where the target output destination button 5 is ON in the process of S30, the process of S31 is performed, and in the case where the target output destination button 5 is OFF in th e process of S30, the processes of S32 and S33 are performed.

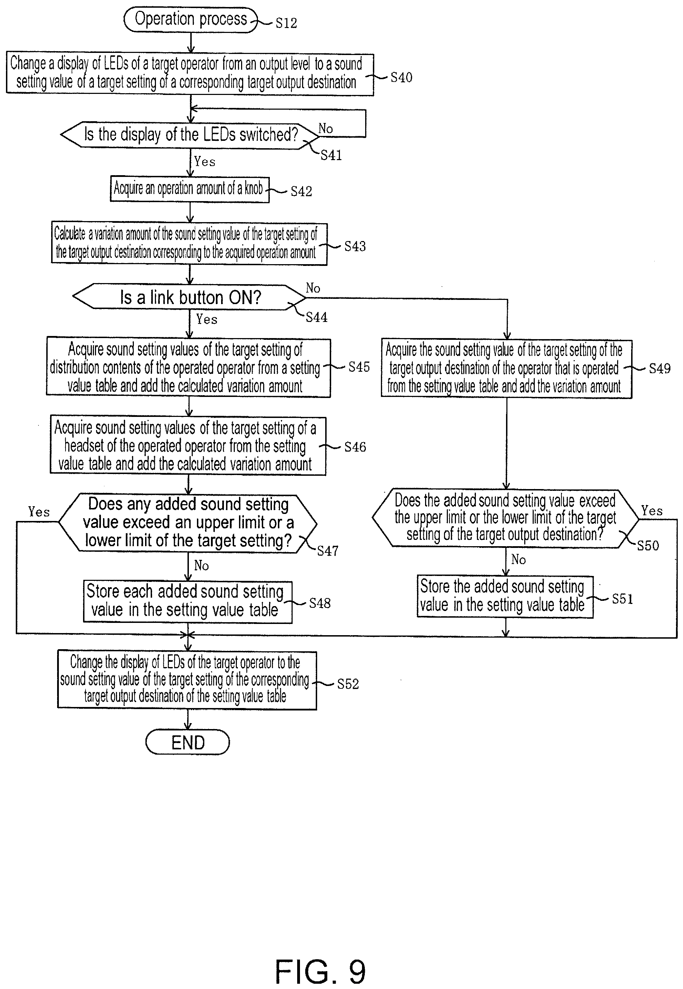

Referring to FIG. 7 again, after the sound output process of S10, whether any of the knobs 2a to 4a of the first to third operators 2 to 4 is operated is confirmed (S11). In the case where any of the knobs 2a to 4a is operated (S11: YES) in the process of S11, an operation process (S12) is executed. The operation process is described with reference to FIG. 9.

FIG. 9 is a flowchart of the operation process. In the operation process, firstly, the display of the LEDs 2b to 4h corresponding to the knobs 2a to 4a that are operated is changed from the output levels to the sound setting values of the target setting of the target setting memory 12b of the target output destination of the target output destination memory 12a corresponding to the knobs 2a to 4a (S40).

Specifically, the knobs 2a to 4a that are operated are specified, and the sound setting values of the target setting of the target setting memory 12b of the target output destination of the target output destination memory 12a corresponding to such knobs 2a to 4a are acquired from the setting value table 11b, and the acquired sound setting value that is acquired is displayed on the LEDs 2b to 2h.

After the process of S40, whether the display of the LEDs 2b to 4h is switched from the output levels to the sound setting values of the target setting of the target output destination through the process of S40 is confirmed (S41). In the case where the display of the LEDs 2b to 4h is not switched from the output levels to the sound setting values of the target setting of the target output destination (S41: NO) in the process of S41, the process of S41 is repeated. Accordingly, during the period until the display of the LEDs 2b to 4h is switched from the output levels to the sound setting values of the target setting of the target output destination, a change of the sound setting values by operating the knobs 2a to 4a is not accepted.

Meanwhile, in the case where the display of the LEDs 2b to 4h is switched from the output levels to the sound setting values in the target setting of the target output destination (S41: YES), the operation amounts of the knobs 2a to 4a after the display of the LEDs 2b to 4h is switched are acquired (S42). After the process of S42, the variation amounts of the target setting of the target setting memory 12b of the target output destination of the target output destination memory 12a corresponding to the acquired operation amounts are calculated (S43).

After the process of S43, whether the link button 6 is ON is confirmed (S44). In the case where the link button 6 is ON in the process of S44 (S44: YES), the sound setting values of the target setting of the target setting memory 12b of the distribution contents for the first to third operators 2 to 4 in which the knobs 2a to 4a are operated are acquired. The variation amounts calculated in the process of S43 are added to the acquired sound setting values (S45).

After the process of S45, the sound setting values of the target setting of the target setting memory 12b of the headset 50 for the first to third operators 2 to 4 in which the knobs 2a to 4a are operated are acquired. The variation amounts calculated in the process of S43 are added to the acquired sound setting values (S46).

After the process of S46, whether any of the sound setting values added in the processes of S45, S46 exceeds the upper limit or the lower limit of the target setting in the target setting memory 12b is confirmed (S47). Specifically, whether any of the sound setting values added in the processes of S45, S46 becomes a value greater than the upper limit of the target setting from a value equal to or less than the upper limit of the target setting or whether any of the sound setting values added in the processes of S45, S46 becomes a value less than the lower limit of the target setting from a value equal to or greater than the lower limit of the target setting is confirmed.

In the case where none of the sound setting values added in the processes of S45, S46 exceeds the upper limit or the lower limit of the target setting in the target setting memory 12b in the process of S47 (S47: NO), the sound setting values added in the processes of S45, S46 are respectively stored in the corresponding regions of the setting value table 11b. Meanwhile, in the case where any of the sound setting values added in the processes of S45, S46 exceeds the upper limit or the lower limit of the target setting in the target setting memory 12b in the process of S47 (S47: YES), the process of S48 is skipped.

Accordingly, in the case where the link button 6 is ON, the corresponding sound setting values of the headset 50 and the distribution contents can be changed at the same time by operating the knobs 2a to 4a. Meanwhile, in the case where any of the sound setting values of the headset 50 and the distribution contents exceeds the upper limit or the lower limit, none of the sound setting values is changed.

Meanwhile, in the case where the link button 6 is OFF (S44: NO) in the process of S44, the sound setting values corresponding to the target setting of the target setting memory 12b of the target output destination of the target output memory 12a for the first to third operators 2 to 4 in which the knobs 2a to 4a are operated are acquired from the setting value table 11b. The variation amounts calculated in the process of S43 are added to the acquired sound setting values (S49).

After the process of S49, whether the sound setting values added in the process of S49 exceed the upper limit or the lower limit of the target setting of the target setting memory 12b of the target output destination of the target output destination memory 12a is confirmed (S50). In the case where the sound setting values added in the process of S49 do not exceed the upper limit or the lower limit of the target setting of the target output destination in the process of S50 (S50: NO), the sound setting values added in the process of S49 are stored in the corresponding region of the setting value table 11b (S51). Meanwhile, in the case where the sound setting values added in the process of S49 exceed the upper limit or the lower limit of the target setting of the target output destination (S50: YES), the process of S51 is skipped.

After the processes of S47, S48, S50, S51, the sound setting values corresponding to the target setting of the target setting memory 12b of the target output destination of the target output destination memory 12a for the first to third operators 2 to 4 in which the knobs 2a to 4a are operated are acquired from the setting value table 11b, and the acquired sound setting values are displayed on the corresponding LEDs 2b to 4h (S52).

Referring to FIG. 7 again, in the process of S11, in the case where none of the knobs 2a to 4a is operated (S11: NO), the operation process of S12 is skipped. After the processes of S11 and S12, the processes following S1 are repeated.

Although the above has been described based on the above embodiment, it can be easily inferred that various improvements and modifications are possible.

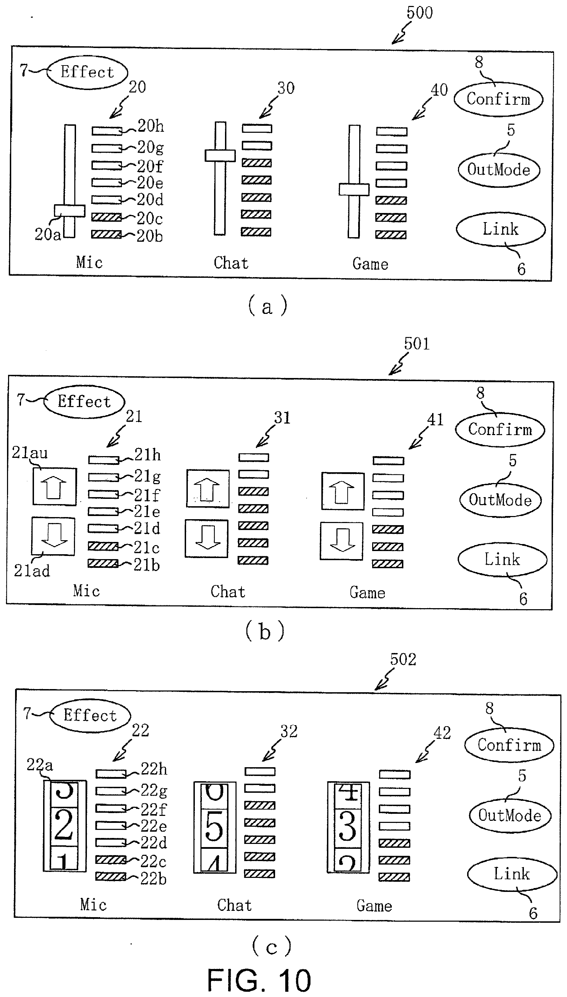

In the above embodiment, the rotation-type knobs 2a to 4a are shown as as operators (sound setting operators) for changing the sound setting values. However, the invention is not limited thereto. For example, as shown in a mixing device 500 shown in (a) of FIG. 10, the sound setting operator may also be configured as a slider-type operator 20a in which a knob is operated in an upper-lower direction. In such case, LEDs 20b to 20h may be arranged in the operation direction of the operator 20a, i.e., the upper-lower direction.

In addition, as shown in a mixing device 501 shown in (b) of FIG. 10, the sound setting operator may also be formed by an upper button 21au, which increases the sound setting value, and a lower button 21ad, which decreases the sound setting value. Furthermore, as shown in a mixing device 502 shown in (c) of FIG. 10, the sound setting operator may also be configured a rotation-type operator 22a in which numerical values of 0 to 9, etc., are assigned in advance. In such case, a value (e.g., a value obtained by multiplying the numerical value by a predetermined coefficient) in accordance with the numerical value located at the front surface in the operator 22a (e.g., "2" in the operator 22a in (c) of FIG. 10) is acquired as the sound setting value. It is noted that the operator 22a is not limited to being assigned numerical values. For example, letters, such as A, B, C, may be assigned to the operator 22a, and the sound setting value of a value in accordance with the letter located on the front surface in the operator 22a may be acquired.

In addition, the sound setting operator is not limited to being formed by a knob, but may also be configured as a touch panel. At this time, for example, it may also be that in the case where an upward swipe is input to the touch panel, the sound setting value is increased, and in the case where a downward swipe is input to the touch panel, the sound setting value is creased.

In the above embodiment, the microphone sounds, the voice chat sounds, and the sounds of the game machine 60 are respectively assigned to the first to third operators 2 to 4. However, the invention is not limited thereto. For example, it may also be that the voice chat sounds are assigned to the first operator 2, the microphone sounds are assigned to the second operator 3, and the sounds of the game machine 60 are assigned to the third operator 4.

In addition, an operator, etc., which switches the sound input destinations assigned to the first to third operators 2 to 4 may also be provided. In addition, the input destinations assigned to the first to third operators 2 to 4 may be switched in accordance with an instruction from the PC 70. In such case, a control signal under the standard of musical instrument digital interface (MIDI) may be adopted, as an example, as the control signal used for the instruction from the PC 70.

Moreover, the sounds mixed by the mixing device 1 are not limited to sounds from the microphone sounds, the voice chat sounds, and the sounds from the game machine 60. For example, in place of the microphone sounds, the sounds of music reproduced by a music player may be used, or the musical tones played by an electronic musical instrument may be used. In such case, the sounds of music reproduced by a music player or the musical tones played by an electronic musical instrument in place of the microphone sounds may be assigned to the first to third operators 2 to 4. Similarly, in place of the voice chat sounds or the sounds from the game machine 60, the sounds input from another application software executed by the PC 70 or another device may also be used. For example, in place of the game machine 60, a game application software (referred to as "game application" in the following) may be mounted to the PC 70, and the sounds during game play of the game application executed by the PC 70 may be used.

Moreover, in the above embodiment, three operators, which are the first to third operators 2 to 4, are provided in the mixing device 1. However, the invention is not limited thereto. The number of operators provided in the mixing device 1 is in accordance with the number of types of sounds input to the mixing device 1, and may be 2 or fewer or 4 or more.

In the above embodiment, in the case where the target output destination button 5 is OFF, the headset 50 is set as the target output destination, and in the case where the target output destination button 5 is ON, the distribution contents are set as the target output destination. However, the invention is not limited thereto. It may also be that the headset 50 is set as the target output destination in the case where the target output destination button is ON, and the distribution contents are set as the target output destination in the case where the target output destination button is OFF. Also, in place of the target output destination button 5, it may also be that a selection operator (e.g., a rotary switch) selecting one output destination from multiple output destinations is provided, and the output destination selected by the selection operator is set as the target output destination. In such case, by including output destinations other than the headset 50 and the distribution contents as output destinations selectable by the selection operator, the sound setting values with respect to the output destinations other than the headset 50 and the distribution contents can also be changed, and the output levels of the output destinations other than the headset 50 and the distribution contents can also be displayed.

In the above embodiment, it is configured that, when the link button 6 is set to ON and the knobs 2a to 4a are operated, in the case where the sound setting values of any of the headset 50 and the distribution contents exceed the upper limit or the lower limit, the setting of the sound setting values is performed for none of the headset 50 and the distribution contents. However, the invention is not limited thereto. When the link button 6 is set to ON and the knobs 2a to 4a are operated, in the case where the sound setting values of any of the headset 50 and the distribution contents exceed the upper limit or the lower limit, it may also be that the setting is not carried out for the one whose sound setting values exceed the upper limit or the lower limit, while the setting continues for the one whose sound setting values do not exceed the upper limit or the lower limit until reaching the upper limit or the lower limit of the sound setting value.

In the above embodiment, the headset 50 is exemplified as a component connected to the mixing device 1, but the invention is not limited thereto. The microphone and the headphone may be set as separate devices, and, in place of the headphone, a speaker may be used.

In the above embodiment, the output levels and the sound setting values are switchably displayed on the LEDs 2a to 4h. However, the invention is not limited thereto. For example, it may also be that the LEDs for the output levels and the LEDs for the sound setting values are provided separately, and the output levels and the sound setting values are displayed at the same time. In addition, the display device is not limited to LEDs. It may also be that a 7-segment LED is used as the display device, and a numerical value corresponding to the magnitude of the output level or the sound setting value is displayed on the 7-segment LED.

Furthermore, the display device may also be a liquid crystal display (LED) provided on the outer circumferences of the knobs 2a to 4a. In such case, a rod-shaped display part with a length in accordance with the magnitude of the output level or the sound setting value may be displayed on the LCD, or a color in accordance with the magnitude of the output level or the sound setting value may be displayed (e.g., displaying blue when the output level, etc., is low and displaying red when the output level, etc., is high). In addition, a numerical value or a letter (e.g., A, B, C, ..., in the order of the magnitude of the output level, etc.) of the magnitude of the output level or the sound setting value may be displayed on the LCD.

In the above embodiment, the acoustic effects are set to OFF by setting the degrees of the acoustic effect to the lowest value by using the knobs 2a to 4a. However, the invention is not limited thereto. For example, a button for switching between ON and OFF of the acoustic effect may be provided for each of the first to third operators 2 to 4 and, in accordance with the state of such button, the ON/OFF of the acoustic effect to the corresponding microphone sounds, voice chat sounds, or sounds of the game machine 60 may be switched individually.

In the above embodiment, it is configured that, at the time of operating the knobs 2a to 4a, it is possible to change the sound setting values by using the knobs 2a to 4a after the display of the LEDs 2b to 4h is switched from the output levels to the sound setting values. However, the invention is not limited thereto. It may also be that the sound setting values are changed in accordance with the operation of the knobs 2a to 4a, regardless of the display of the LEDs 2b to 4h.

In addition, it may also be that it is possible to change the sound setting values after a predetermined time (e.g., after 0.5 seconds) following the switching of the display of the LEDs 2b to 4h from the output levels to the sound setting values. Accordingly, that a sound setting value unexpected by the user H is set can be more suitably suppressed. In addition, by setting the display of the LEDs 2b to 4h immediately after the display of the LEDs 2b to 4h is switched from the output levels to the sound setting values to a display mode (e.g., a lighting color "red"), and setting the display of the LEDs 2b to 4h after a predetermined time since then to another display mode (e.g., a lighting color "blue"), the user H is notified of the information that it is possible to change the sound setting value.

In the above embodiment, in the processes of S41 to S43 in (b) of FIG. 8, in the case where the confirmation button 8 is ON, instead of the sounds corresponding to the headset 50, the sounds corresponding to the distribution contents are output to the headset 50. However, the invention is not limited thereto. For example, in the case where the confirmation button 8 is ON, it may also be that the sounds corresponding to the headset 50 and the sounds corresponding to the distribution contents are both output to the headset 50.

At this time, the sounds corresponding to the headset 50 may be output to a right channel (a channel corresponding to the right ear) in the headphone of the headset 50, and the sounds corresponding to the distribution contents may be output to a left channel (a channel corresponding to the left ear) in the headphone of the headset.

In the above embodiment, the mixing device 1 is configured as being connected to the PC 70 to which the game machine 60 is connected. However, the invention is not limited thereto. For example, it may also be that, in place of the game machine 60, an electronic apparatus that outputs other sounds, such as a musical electronic instrument, is connected to the PC 70, and the sounds output by the electronic musical instrument, etc., are mixed by the mixing device 1. In addition, it may also be that the PC 70 is omitted, and the mixing device 1 is directly connected to the game machine 60 or the electronic musical instrument, etc.

In the above embodiment, the control program 11a is executed by the mixing device 1. However, the invention is not limited thereto. For example, the control program 11a may also be executed by the PC 70 or an information processing device (computer), such as the PC 70 or a portable terminal, etc. In such case, it may also be that the first to third operators 2 to 4, the target output destination button 5, the link button 6, the effect setting button 7, and the confirmation button 8 are provided in the information processing device executing the control program 11a.

### [Reference Signs List]

1, 500, 501, 502: Mixing device;
15: Sound input/output device (a portion of input unit, a portion of output unit);
16: External input/output device (a portion of input unit, a portion of output unit);
2a, 3a, 4a: Knob (sound setting operator);
2b to 2h, 3b to 3h, 4b to 4h, 20b to 20h, 21b to 22h, 22b to 22h: LED (display unit);
5: Target output destination button (selection operator);
20a: Operator (sound setting operator);
21au: Upper button (sound setting operator);
21ad: Lower button (sound setting operator);
22a: Operator (sound setting operator);
S8: Setting value acquisition means, a portion of mixing means, setting value acquisition step, a portion of mixing step;
S31 to S33: A portion of mixing means, a portion of mixing step.

## Claims

1. A mixing device (1, 500, 501, 502), comprising:
a plurality of input units (15, 16), inputting sounds;
a plurality of output units (15, 16), outputting the sounds;
a plurality of sound setting operators (2a, 3a, 4a, 20a, 21au, 21ad, 22a), each of which configured to set a sound setting value that is a setting value relating to the sounds input at each of input units (15, 16) for each of the output units (15, 16) respectively, wherein each of the plurality of sound setting operators (2a, 3a, 4a) is formed by a knob of a rotation-type, and the knob is configured to limitlessly rotate in an operation direction of the knob;
a selection operator (5), selecting the output unit (15, 16) of a target for setting the sound setting values, wherein the sound setting values are stored for each combination of the sound setting operators and the output units;
a setting value acquisition means (S8), acquiring the sound setting values set by the sound setting operators (2a, 3a, 4a, 20a, 21au, 21ad, 22a) with respect to the output unit (15, 16) selected by the selection operator (5); and
a mixing means (S31 to S33), for each of the output units (15, 16), mixing the sounds input at the input units (15, 16) based on the sound setting values corresponding to each of the output units (15, 16) and being the sound setting values acquired by the setting value acquisition means (S8).

2. The mixing device (1, 500, 501, 502) as claimed in claim 1, provided with a display unit (2b to 2h, 3b to 3h, 4b to 4h, 20b to 20h, 21b to 22h, 22b to 22h) in which a display based on the sound setting value corresponding to the output unit (15, 16) selected by the selection operator (5) and being the sound setting value corresponding to the sound setting operator (2a, 3a, 4a, 20a, 21au, 21ad, 22a) is displayed along an operation direction of the sound setting operator (2a, 3a, 4a, 20a, 21au, 21ad, 22a).

3. The mixing device (1, 500, 501, 502) as claimed in claim 2, wherein the display based on the sound setting value or an output level of the sounds in which the sound setting value is applied to the sounds input at the input unit (15, 16) is displayed on the display unit (2a, 3a, 4a, 20a, 21au, 21ad, 22a).

4. The mixing device (1, 500, 501, 502) as claimed in claim 3, wherein, on the display unit (2a, 3a, 4a, 20a, 21au, 21ad, 22a), a region for displaying the display based on the sound setting value and the display based on the output level are the same, and
in a state in which the display based on the output level is being displayed on the display unit (2a, 3a, 4a, 20a, 21au, 21ad, 22a), in a case where the sound setting operator (2a, 3a, 4a, 20a, 21au, 21ad, 22a) is operated, a display of the display unit (2a, 3a, 4a, 20a, 21au, 21ad, 22a) is changed from the display based on the output level to the display based on the sound setting value.

5. The mixing device (1, 500, 501, 502) as claimed in claim 3, in the state in which the display based on the output level is being displayed on the display unit (2a, 3a, 4a, 20a, 21au, 21ad, 22a), in a case where the sound setting operator (2a, 3a, 4a, 20a, 21au, 21ad, 22a) is operated, during a period in which the display of the display unit (2a, 3a, 4a, 20a, 21au, 21ad, 22a) is switched from the display based on the output level to the display based on the sound setting value, setting of the sound setting value by operating the sound setting operator (2a, 3a, 4a, 20a, 21au, 21ad, 22a) is not accepted.

6. The mixing device (1, 500, 501, 502) as claimed in claim 1, wherein the sound setting values corresponding to the output units (15, 16) are respectively changed by operating the sound setting operator (2a, 3a, 4a, 20a, 21au, 21ad, 22a).

7. The mixing device (1, 500, 501, 502) as claimed in claim 6, wherein in a case where the sound setting operator (2a, 3a, 4a, 20a, 21au, 21ad, 22a) is operated, and the sound setting value corresponding to any of the output units (15, 16) exceeds an upper limit or a lower limit through operation of the sound setting operator (2a, 3a, 4a, 20a, 21au, 21ad, 22a), none of the sound setting values corresponding to the output units (15, 16) is changed.

8. The mixing device (1, 500, 501, 502) as claimed in claim 1, wherein the sounds output to one of the output units (15, 16) is also output to another one of the output units (15, 16).

9. The mixing device (1, 500, 501, 502) as claimed in any one of claims 1 to 8, wherein the sound setting value is a volume setting value of the sounds.

10. The mixing device (1, 500, 501, 502) as claimed in any one of claims 1 to 8, wherein the sound setting value is a degree of an acoustic effect applied to the sounds.

11. The mixing device (1, 500, 501, 502) as claimed in any one of claims 1 to 10, wherein among the plurality of output units (15, 16), at least one is connected to a headset (2) and at least another one is connected to a PC (70).

12. A mixing method, executed by a mixing device (1, 500, 501, 502) comprising: a plurality of input units (15, 16), inputting sounds; a plurality of output units (15, 16), outputting the sounds; a plurality of sound setting operators (2a, 3a, 4a, 20a, 21au, 21ad, 22a), each of which configured to set a sound setting value that is a setting value relating to the sounds input at each of the input units (15, 16) for each of the output units (15, 16) respectively, wherein each of the plurality of sound setting operators (2a, 3a, 4a) is formed by a knob of a rotation-type, and the knob is configured to limitlessly rotate in an operation direction of the knob; and a selection operator (5), selecting the output unit (15, 16) of a target for setting the sound setting values, wherein the sound setting values are stored for each combination of the sound setting operators and the output units,
wherein the mixing method comprises:
a setting value acquisition step of acquiring the sound setting values set by the sound setting operators (2a, 3a, 4a, 20a, 21au, 21ad, 22a) with respect to the output unit (15, 16) selected by the selection operator (5); and
a mixing step of, for each of the output units (15, 16), mixing the sounds input at the input units (15, 16) based on the sound setting values corresponding to each of the output units (15, 16) and being the sound setting values acquired at the setting value acquisition step.

13. The mixing method as claimed in claim 12, further comprising
displaying a display based on the sound setting value corresponding to the output unit (15, 16) selected by the selection operator (5),
wherein the display is based on the sound setting value corresponding to the sound setting operator (2a, 3a, 4a, 20a, 21au, 21ad, 22a) and is displayed along an operation direction of the sound setting operator (2a, 3a, 4a, 20a, 21au, 21ad, 22a).

14. The mixing method as claimed in claim 13, wherein the display is based on the sound setting value or an output level of the sounds in which the sound setting value is applied to the sounds input at the input unit (15, 16).

15. The mixing method as claimed in any one of claims 12 to 14, wherein among the plurality of output units (15, 16), at least one is connected to a headset (2) and at least another one is connected to a PC (70).

## Patentansprüche

1. Mischvorrichtung (1, 500, 501, 502), aufweisend:
mehrere Eingabeeinheiten (15, 16), welche Töne eingeben;
mehrere Ausgabeeinheiten (15, 16), welche die Töne ausgeben;
mehrere Toneinstellungsoperatoren (2a, 3a, 4a, 20a, 21au, 21ad, 22a), welche jeweils so konfiguriert sind, dass sie einen Toneinstellungswert, der ein Einstellungswert ist, der sich auf die Töne bezieht, die in jeweilige der Eingabeeinheiten (15, 16) eingegeben werden, entsprechend für jeweilige der Ausgabeeinheiten (15, 16) einstellen, wobei jeder der mehreren Toneinstellungsoperatoren (2a, 3a, 4a) durch einen Drehknopf gebildet wird und der Knopf so konfiguriert ist, dass er in eine Bedienungsrichtung des Knopfes unbegrenzt drehbar ist;
einen Auswahloperator (5), welcher die Ausgabeeinheit (15, 16) eines Ziels zum Einstellen der Toneinstellungswerte auswählt, wobei die Toneinstellungswerte für jede Kombination der Toneinstellungsoperatoren und der Ausgabeeinheiten gespeichert werden;
ein Einstellungswert-Erwerbsmittel (S8), welches die durch die Toneinstellungsoperatoren (2a, 3a, 4a, 20a, 21au, 21ad, 22a) eingestellten Toneinstellungswerte in Bezug auf die vom Auswahloperator (5) ausgewählte Ausgabeeinheit (15, 16) erwirbt; und
ein Mischmittel (S31 bis S33) für jede der Ausgabeeinheiten (15, 16), welches die an den Eingabeeinheiten (15, 16) eingegebenen Töne auf Grundlage der Toneinstellungswerte mischt, die jeweiligen der Ausgabeeinheiten (15, 16) entsprechen und die Toneinstellungswerte sind, die von dem Einstellungswert-Erwerbsmittel (S8) erworben werden.

2. Mischvorrichtung (1, 500, 501, 502) nach Anspruch 1, welche mit einer Anzeigeeinheit (2b bis 2h, 3b bis 3h, 4b bis 4h, 20b bis 20h, 21b bis 22h, 22b bis 22h), versehen ist, in welcher eine Anzeige, welche auf dem Toneinstellungswert basiert, der der durch den Auswahloperator (5) ausgewählten Ausgabeeinheit (15, 16) entspricht und der Toneinstellungswert ist, der dem Toneinstellungsoperator (2a, 3a, 4a, 20a, 21au, 21ad, 22a) entspricht, entlang einer Bedienungsrichtung des Toneinstellungsoperators (2a, 3a, 4a, 20a, 21au, 21ad, 22a) angezeigt wird.

3. Mischvorrichtung (1, 500, 501, 502) nach Anspruch 2, wobei auf der Anzeigeeinheit (2a, 3a, 4a, 20a, 21au, 21ad, 22a) die Anzeige angezeigt wird, die auf dem Toneinstellungswert oder einem Ausgabepegel der Töne basiert, mit welchem der Toneinstellungswert auf die Töne angewendet wird, die an der Eingabeeinheit (15, 16) eingegeben werden.

4. Mischvorrichtung (1, 500, 501, 502) nach Anspruch 3, wobei auf der Anzeigeeinheit (2a, 3a, 4a, 20a, 21au, 21ad, 22a) eine Region zum Anzeigen der Anzeige auf Grundlage des Toneinstellungswertes und der Anzeige auf Grundlage des Ausgabepegels die gleichen sind, und
in einem Zustand, wobei die Anzeige auf Grundlage des Ausgabepegels auf der Anzeigeeinheit (2a, 3a, 4a, 20a, 21au, 21ad, 22a) angezeigt wird, wenn der Toneinstellungsoperator (2a, 3a, 4a, 20a, 21au, 21ad, 22a) bedient wird, eine Anzeige der Anzeigeeinheit (2a, 3a, 4a, 20a, 21au, 21ad, 22a) von der Anzeige auf Grundlage des Ausgabepegels auf die Anzeige auf Grundlage des Toneinstellungswertes wechselt.

5. Mischvorrichtung (1, 500, 501, 502) nach Anspruch 3, wobei in dem Zustand, wobei die Anzeige auf Grundlage des Ausgabepegels auf der Anzeigeeinheit (2a, 3a, 4a, 20a, 21au, 21ad, 22a) angezeigt wird, wenn der Toneinstellungsoperator (2a, 3a, 4a, 20a, 21au, 21ad, 22a) bedient wird, während einer Periode, in der die Anzeigen der Anzeigeeinheit (2a, 3a, 4a, 20a, 21au, 21ad, 22a) von der Anzeige auf Grundlage des Ausgabepegels auf die Anzeige auf Grundlage des Toneinstellungswertes wechselt, ein Eistellen des Toneinstellungswertes durch Bedienen des Toneinstellungsoperators (2a, 3a, 4a, 20a, 21au, 21ad, 22a) nicht akzeptiert wird.

6. Mischvorrichtung (1, 500, 501, 502) nach Anspruch 1, wobei die Toneinstellungswerte, die den Ausgabeeinheiten (15, 16) entsprechen, jeweils durch Bedienen des Toneinstellungsoperators (2a, 3a, 4a, 20a, 21au, 21ad, 22a) geändert werden.

7. Mischvorrichtung (1, 500, 501, 502) nach Anspruch 6, wobei, wenn der Toneinstellungsoperator (2a, 3a, 4a, 20a, 21au, 21ad, 22a) bedient wird und der Toneinstellungswert, der einer der Ausgabeeinheiten (15, 16) entspricht, durch Bedienung des Toneinstellungsoperators (2a, 3a, 4a, 20a, 21au, 21ad, 22a) eine obere Grenze oder eine untere Grenze übersteigt, keiner der Toneinstellungswerte geändert wird, die den Ausgabeeinheiten (15, 16) entsprechen.

8. Mischvorrichtung (1, 500, 501, 502) nach Anspruch 1, wobei die Töne, die an eine der Ausgabeeinheiten (15, 16) ausgegeben werden, auch an eine andere der Ausgabeeinheiten (15, 16) ausgegeben werden.

9. Mischvorrichtung (1, 500, 501, 502) nach einem der Ansprüche 1 bis 8, wobei der Toneinstellungswert ein Volumeneinstellungswert der Töne ist.

10. Mischvorrichtung (1, 500, 501, 502) nach einem der Ansprüche 1 bis 8, wobei der Toneinstellungswert ein Maß eines akustischen Effekts ist, der auf die Töne angewendet wird.

11. Mischvorrichtung (1, 500, 501, 502) nach einem der Ansprüche 1 bis 10, wobei von den mehreren Ausgabeeinheiten (15, 16) mindestens eine mit einem Headset (2) verbunden ist und mindestens eine andere mit einem PC (70) verbunden ist.

12. Mischverfahren, ausgeführt von einer Mischvorrichtung (1, 500, 501, 502), aufweisend: mehrere Eingabeeinheiten (15, 16), welche Töne eingeben; mehrere Ausgabeeinheiten (15, 16), welche die Töne ausgeben; mehrere Toneinstellungsoperatoren (2a, 3a, 4a, 20a, 21au, 21ad, 22a), welche jeweils so konfiguriert sind, dass sie einen Toneinstellungswert, der ein Einstellungswert ist, der sich auf die Töne bezieht, die in jeweilige der Eingabeeinheiten (15, 16) eingegeben werden, entsprechend für jeweilige der Ausgabeeinheiten (15, 16) einstellen, wobei jeder der mehreren Toneinstellungsoperatoren (2a, 3a, 4a) durch einen Drehknopf gebildet wird und der Knopf so konfiguriert ist, dass er in eine Bedienungsrichtung des Knopfes unbegrenzt drehbar ist; und einen Auswahloperator (5), welcher die Ausgabeeinheit (15, 16) eines Ziels zum Einstellen der Toneinstellungswerte auswählt, wobei die Toneinstellungswerte für jede Kombination der Toneinstellungsoperatoren und der Ausgabeeinheiten gespeichert werden,
wobei das Mischverfahren umfasst:
einen Einstellungswert-Erwerbsschritt zum Erwerben der durch die Toneinstellungsoperatoren (2a, 3a, 4a, 20a, 21au, 21ad, 22a) eingestellten Toneinstellungswerte in Bezug auf die vom Auswahloperator (5) ausgewählte Ausgabeeinheit (15, 16); und
einen Mischungsschritt zum Mischen der an den Eingabeeinheiten (15, 16) eingegebenen Töne auf Grundlage der Toneinstellungswerte, die jeweiligen der Ausgabeeinheiten (15, 16) entsprechen und die Toneinstellungswerte sind, die im Einstellungswert-Erwerbsschritt erworben werden, für jede der Ausgabeeinheiten (15, 16).

13. Mischverfahren nach Anspruch 12, ferner umfassend
Anzeigen einer Anzeige auf Grundlage des Toneinstellungswertes, der der durch den Auswahloperator (5) ausgewählten Ausgabeeinheit (15, 16) entspricht,
wobei die Anzeige auf dem Toneinstellungswert basiert, der dem Toneinstellungsoperator (2a, 3a, 4a, 20a, 21au, 21ad, 22a) entspricht, und entlang einer Bedienungsrichtung des Toneinstellungsoperators (2a, 3a, 4a, 20a, 21au, 21ad, 22a) angezeigt wird.

14. Mischverfahren nach Anspruch 13, wobei die Anzeige auf dem Toneinstellungswert oder einem Ausgabepegel der Töne basiert, mit welchem der Toneinstellungswert auf die Töne angewendet wird, die an der Eingabeeinheit (15, 16) eingegeben werden.

15. Mischverfahren nach einem der Ansprüche 12 bis 14, wobei von den mehreren Ausgabeeinheiten (15, 16) mindestens eine mit einem Headset (2) verbunden ist und mindestens eine andere mit einem PC (70) verbunden ist.

## Revendications

1. Dispositif de mixage (1, 500, 501, 502), comprenant :
une pluralité d'unités d'entrée (15, 16), entrant des sons ;
une pluralité d'unités de sortie (15, 16) émettant les sons ;
une pluralité d'opérateurs de réglage de son (2a, 3a, 4a, 20a, 21au, 21ad, 22a), dont chacune est configurée pour régler une valeur de réglage de son qui est une valeur de réglage relative aux sons entrés au niveau de chacune des unités d'entrée (15, 16) pour chacune des unités de sortie (15, 16) respectivement, chacun de la pluralité d'opérateurs de réglage de son (2a, 3a, 4a) étant formé par un bouton de type rotatif, et le bouton étant configuré pour tourner sans limite dans une direction de fonctionnement du bouton ;
un opérateur de sélection (5), sélectionnant l'unité de sortie (15, 16) d'une cible pour régler les valeurs de réglage de son, les valeurs de réglage de son étant stockées pour chaque combinaison des opérateurs de réglage de son et des unités de sortie ;
un moyen d'acquisition de valeurs de réglage (S8), acquérant les valeurs de réglage de son réglées par les opérateurs de réglage de son (2a, 3a, 4a, 20a, 21au, 21ad, 22a) par rapport à l'unité de sortie (15, 16) sélectionnée par l'opérateur de sélection (5) ; et
des moyens de mixage (S31 à S33), pour chacune des unités de sortie (15, 16), mixant les sons entrés au niveau des unités d'entrée (15, 16) sur la base des valeurs de réglage de son correspondant à chacune des unités de sortie (15, 16) et étant les valeurs de réglage de son acquises par les moyens d'acquisition de valeurs de réglage (S8).

2. Dispositif de mixage (1, 500, 501, 502) selon la revendication 1, muni d'une unité d'affichage (2b à 2h, 3b à 3h, 4b à 4h, 20b à 20h, 21b à 22h, 22b à 22h), dans lequel un affichage basé sur la valeur de réglage de son correspondant à l'unité de sortie (15, 16) sélectionnée par l'opérateur de sélection (5) et étant la valeur de réglage de son correspondant à l'opérateur de réglage de son (2a, 3a, 4a, 20a, 21au, 21ad, 22a) est affiché le long d'une direction de fonctionnement de l'opérateur de réglage de son (2a, 3a, 4a, 20a, 21au, 21ad, 22a).

3. Dispositif de mixage (1, 500, 501, 502) selon la revendication 2, dans lequel l'affichage basé sur la valeur de réglage de son ou un niveau de sortie des sons dans lequel la valeur de réglage de son est appliquée aux sons entrés au niveau de l'unité d'entrée (15, 16) est affichée sur l'unité d'affichage (2a, 3a, 4a, 20a, 21au, 21ad, 22a).

4. Dispositif de mixage (1, 500, 501, 502) selon la revendication 3, dans lequel, sur l'unité d'affichage (2a, 3a, 4a, 20a, 21au, 21ad, 22a), une zone permettant de faire apparaître l'affichage basé sur la valeur de réglage de son et l'affichage basé sur le niveau de sortie sont identiques et,
dans un état dans lequel l'affichage basé sur le niveau de sortie apparaît sur l'unité d'affichage (2a, 3a, 4a, 20a, 21au, 2lad, 22a), dans le cas où l'opérateur de réglage de son (2a, 3a, 4a, 20a, 21au, 21ad, 22a) est actionné, un affichage de l'unité d'affichage (2a, 3a, 4a, 20a, 21au, 21ad, 22a) passe de l'affichage basé sur le niveau de sortie à l'affichage basé sur la valeur de réglage de son.

5. Dispositif de mixage (1, 500, 501, 502) selon la revendication 3, dans l'état dans lequel l'affichage basé sur le niveau de sortie apparaît sur l'unité d'affichage (2a, 3a, 4a, 20a, 21au, 21ad, 22a), dans le cas où l'opérateur de réglage de son (2a, 3a, 4a, 20a, 21au, 21ad, 22a) est actionné, pendant une période pendant laquelle l'affichage de l'unité d'affichage (2a, 3a, 4a, 20a, 21au, 21ad, 22a) est passé de l'affichage basé sur le niveau de sortie à l'affichage basé sur la valeur de réglage de son, le réglage de la valeur de réglage de son par actionnement de l'opérateur de réglage de son (2a, 3a, 4a, 20a, 21au, 21ad, 22a) n'est pas accepté.

6. Dispositif de mixage (1, 500, 501, 502) selon la revendication 1, dans lequel les valeurs de réglage de son correspondant aux unités de sortie (15, 16) sont respectivement modifiées en actionnant l'opérateur de réglage de son (2a, 3a, 4a, 20a, 21au, 21ad, 22a).

7. Dispositif de mixage (1, 500, 501, 502) selon la revendication 6, dans lequel, dans le cas où l'opérateur de réglage de son (2a, 3a, 4a, 20a, 21au, 21ad, 22a) est actionné, et la valeur de réglage de son correspondant à l'une quelconque des unités de sortie (15, 16) dépasse une limite supérieure ou une limite inférieure par l'actionnement de l'opérateur de réglage de son (2a, 3a, 4a, 20a, 21au, 2lad, 22a), aucune des valeurs de réglage de son correspondant aux unités de sortie (15, 16) n'est modifiée.

8. Dispositif de mixage (1, 500, 501, 502) selon la revendication 1, dans lequel les sons délivrés à l'une des unités de sortie (15, 16) sont également délivrés à une autre des unités de sortie (15, 16).

9. Dispositif de mixage (1, 500, 501, 502) selon l'une quelconque des revendications 1 à 8, dans lequel la valeur de réglage du son est une valeur de réglage de volume des sons.

10. Dispositif de mixage (1, 500, 501, 502) selon l'une quelconque des revendications 1 à 8, dans lequel la valeur de réglage de son est un degré d'un effet acoustique appliqué aux sons.

11. Dispositif de mixage (1, 500, 501, 502) selon l'une quelconque des revendications 1 à 10, dans lequel, parmi la pluralité d'unités de sortie (15, 16), au moins une est connectée à un casque d'écoute (2) et au moins une autre est connectée à un PC (70).

12. Procédé de mixage, exécuté par un dispositif de mixage (1, 500, 501, 502) comprenant : une pluralité d'unités d'entrée (15, 16) entrant des sons ; une pluralité d'unités de sortie (15, 16) émettant les sons ; une pluralité d'opérateurs de réglage de son (2a, 3a, 4a, 20a, 21au, 2lad, 22a), chacune étant configurée pour régler une valeur de réglage de son qui est une valeur de réglage relative aux sons entrés au niveau de chacune des unités d'entrée (15, 16) pour chacune des unités de sortie (15, 16) respectivement, chacun de la pluralité d'opérateurs de réglage de son (2a, 3a, 4a) étant formé par un bouton de type rotatif, et le bouton étant configuré pour tourner sans limite dans une direction de fonctionnement du bouton ; et un opérateur de sélection (5) sélectionnant l'unité de sortie (15, 16) d'une cible pour régler les valeurs de réglage de son, les valeurs de réglage de son étant stockées pour chaque combinaison des opérateurs de réglage de son et des unités de sortie,
le procédé de mixage comprenant :
une étape d'acquisition des valeurs de réglage consistant à acquérir les valeurs de réglage de son définies par les opérateurs de réglage de son (2a, 3a, 4a, 20a, 21au, 21ad, 22a) par rapport à l'unité de sortie (15, 16) sélectionnée par l'opérateur de sélection (5) ; et
une étape de mixage consistant, pour chacune des unités de sortie (15, 16), à mixer les sons entrés au niveau des unités d'entrée (15, 16) sur la base des valeurs de réglage de son correspondant à chacune des unités de sortie (15, 16) et étant les valeurs de réglage de son acquises lors de l'étape d'acquisition de valeurs de réglage.

13. Procédé de mixage selon la revendication 12, comprenant en outre
l'apparition d'un affichage basé sur la valeur de réglage de son correspondant à l'unité de sortie (15, 16) sélectionnée par l'opérateur de sélection (5),
l'affichage étant basé sur la valeur de réglage de son correspondant à l'opérateur de réglage de son (2a, 3a, 4a, 20a, 21au, 2lad, 22a) et étant affiché le long d'une direction de fonctionnement de l'opérateur de réglage de son (2a, 3a, 4a, 20a, 21au, 2lad, 22a).

14. Procédé de mixage selon la revendication 13, dans lequel l'affichage est basé sur la valeur de réglage de son ou un niveau de sortie des sons dans lequel la valeur de réglage de son est appliquée aux sons entrés au niveau de l'unité d'entrée (15, 16).

15. Procédé de mixage selon l'une quelconque des revendications 12 à 14, dans lequel, parmi la pluralité d'unités de sortie (15, 16), au moins une est connectée à un casque d'écoute (2) et au moins une autre est connectée à un PC (70).
